# EUROPÄISCHE PATENTSCHRIFT

(11) **EP 0 464 348 B1**
(45) Veröffentlichungstag und Bekanntmachung des Hinweises auf die Patenterteilung: **21.02.1996**
(21) Anmeldenummer: 91108101.6
(22) Anmeldetag: 17.05.1991
(51) Int. Cl.: B23B 29/00, B23C 5/24

(54) **Spanabhebendes Werkzeug für Hochglanzbearbeitung**
Cutting tool for superfinish treatment
Outil d'usinage pour le traitement de polissage spéculaire

(30) Priorität: 06.06.1990 DE 9006378 U
(43) Veröffentlichungstag der Anmeldung: 08.01.1992
(73) Patentinhaber: ENTWICKLUNGSZENTRUM FÜR ZERSPANUNGSTECHNIK GMBH & CO. KG, D-77933 Lahr (DE)
(72) Erfinder: Kieninger, Walter, W-7630 Lahr (DE); Füner, Ernst, W-7632 Friesenheim (DE)
(74) Vertreter: Grünecker, Kinkeldey, Stockmair & Schwanhäusser Anwaltssozietät

(56) Entgegenhaltungen:
- EP-A- 0 126 432
- DE-U- 7 621 895
- US-A- 2 962 800
- SOVIET INVENTIONS ILLUSTRATED Section PQ, Week K38, 2. November 1983 Derwent Publications Ltd., London, GB; Class P54, AN 83-769297/38 & SU-A-973 247 (KISHMAKHOV B
- SH) 15. November 1982

## Beschreibung

Die vorliegende Erfindung betrifft ein spanabhebendes Werkzeug für Hochglanzbearbeitung, gemäß Anspruch 1.

Hochglanzflächen von Nicht-Eisen-Metallen und Kunststoffen werden üblicherweise durch Mikrozerspanung erzeugt. Diese Mikrozerspanung wird bisher mit Bearbeitungsverfahren erzeugt, bei denen eine undefinierte Schneide vorliegt, beispielsweise durch Schleifen, Läppen und dgl.

Werden hingegen konventionelle Werkzeuge mit definierter Schneide verwendet, so läßt sich das geforderte Arbeitsergebnis hinsichtlich der Güte der Hochglanzflächen nicht erreichen, da in der Regel matte Schlieren entstehen, die durch Mikroschwingungen ausgelöst werden. Auch der Einsatz von Schneidstoffen auf der Basis von Diamant bzw. anderen hochharten Schneidstoffen führt zu diesem Ergebnis.

Der vorliegenden Erfindung liegt deshalb die Aufgabe zugrunde, ein spanabhebendes Werkzeug für Hochglanzbearbeitung zu schaffen, mit dem ein zufriedenstellendes Bearbeitungsergebnis ermöglicht wird.

Ausgehend von einem Werkzeug mit einem ein Schneidstoffelement lagernden Einstellhalter und einem, den Einstellhalter lagernden Aufnahmeteil ist erfindungsgemäß der Einstellhalter um eine Achse schwenkbar im Aufnahmeteil gehalten, die im wesentlichen in der den Spanwinkel enthaltenden Spanwinkelebene verläuft.

Dadurch wird erreicht, daß der werkstückstoffspezifische Spanwinkel bzw. Freiwinkel entsprechend eingestellt werden kann, wodurch eine Stabilisierung der Mikroschwingungen erreicht wird. Insbesondere ergibt sich vorteilhafterweise ein zufriedenstellendes Arbeitsergebnis dadurch, daß die innerhalb der Werkstoffcharge variierenden Winkel entsprechend jedes Mal neu eingestellt werden können. Durch die Einstellbarkeit wird darüber hinaus vorteilhafterweise eine breiteste Anpassung des Werkzeugs an das jeweilige Werkstück bzw. dessen Werkstoff ermöglicht.

Darüberhinaus wird der Einstellhalter mittels einer Befestigungsschraube an dem Aufnahmeteil gelagert und um zwei Schwenkelemente schwenkbar angeordnet, wobei die Schwenkachse durch die Schwenkelemente verläuft, so wird hierdurch eine einfach Schwenkmöglichkeit geschaffen, welche zuverlässig die entsprechende Einstellung des Spanwinkels bzw. des Freiwinkels ermöglicht.

Weitere Vorteile ergeben sich auch den Unteransprüchen.

Vorteilhafterweise werden als einfache Schwenkelemente Kugeln vorgesehen.

Hierdurch wird besonders vorteilhaft eine Schwenkmöglichkeit nicht nur in einer Richtung geschaffen.

Auf einfache Weise wird die Schwenkbewegung des Einstellhalters gegenüber dem Aufnahmeteil mittels einer Stellschraube bewerkstelligt, die sich durch ein Gewinde im Einstellhalter erstreckt und gegen eine Auflagefläche am Aufnahmeteil anliegt. Somit kann bei ensprechender Wahl des Schraubengewindes eine genaue Einstellung des Schwenkgrades erfolgen.

Ein Festlegen des verschwenkten Einstellhalters wird weiter auf einfache Weise durch eine Fixierschraube erzeugt, die sich durch eine Bohrung im Einstellhalter und in ein Gewinde im Aufnahmeteil erstreckt.

Vorteilhafterweise wird eine gute Einstellbarkeit dadurch erreicht, daß die Schwenkachse im wesentlichen auf der Höhe des Schneidstoffelements läuft.

Um eine genaue Schwenkbewegung des Einstellhalters zu ermöglichen, verläuft die Auflagefläche im wesentlichen parallel zur Schwenkachse und im wesentlichen senkrecht zur Spanwinkelebene. Weiterhin werden die Stellschraube und/oder die Fixierschraube so angeordnet, daß sie von der Schwenkachse beabstandet sind, wodurch, je weiter der Abstand vorgesehen wird, eine sowohl größere Schwenkbewegung als auch genauere Einstellung des Spanwinkels erfolgen kann.

Diamantschneiden zur Hochglanzbearbeitung besitzen eine Bombierung, d.h. einen großen Radius, damit keine Ecke bzw. Spitze schneidet. Vorteilhafterweise weist das erfindungsgemäße Werkzeug deshalb eine Einrichtung zum Einstellen der Bombierungslage auf. Dies erfolgt vorteilhafterweise dadurch, daß eine Einstellschraube an der Auflagefläche des Aufnahmeteils angreift, wobei dieser Angriffsbereich im Bereich der Schwenkachse liegt. D.h. die Einstellschraube trifft auf ein Schwenkelement auf. Weiterhin erstreckt sich diese Einstellschraube durch den Einstellhalter und greift dort in ein Gewinde ein.

Aufgrund der vorbeschriebenen Einrichtung können somit vorteilhafterweise Schneidstoffelemente verwendet werden, die vorzugsweise aus monokristallinen Werkstoffen, wie beispielsweise aus Naturdiamant, gebildet sind.

Für weniger hochqualitative Arbeitsergebnisse sind auch polykristalline Schneidstoffe verwendbar.

Für ein schnelles Auswechseln des Schneidstoffelements wird dieses vorteilhafterweise in einen Schneidstoffelementträger aufgenommen, der seinerseits im Einstellhalter gelagert ist. Dies läßt sowohl ein schnelles Auswechseln entsprechend erbrachter Schneidstoffelemente zu bzw. ermöglicht eine Voreinstellung der Schneidstoffelemente in bezug auf seine Lage im Werkzeug.

Als besonders einfaches Festlegemittel eignet sich vorteilhafterweise eine Spannpratze, mit der das Schneidstoffelement im bzw. am Schneidstoffelementträger festgelegt wird.

Zum definierten Führen des Schneidstoffelementträgers wird eine Schrägführung vorgesehen, deren einstellhalterseitiger Führungsbereich mit einem entsprechend komplimentären Führungsbereich des Schneidstoffelementträgers zusammenwirkt.

Alternativ kann als Führung des Schneidstoffelementträgers auch ein bogenförmiger Vorsprung vorgesehen werden, der in eine entsprechende bogenförmige Ausnehmung im Einstellhalter in Betriebsstellung eingreift.

Zur definierten Lagesicherung des Schneidstoffelementträgers im Einstellhalter wird der Schneidstoffelementträger mittels wenigstens einer Schraube im Einstellhalter festgelegt.

Das erfindungsgemäße Werkzeug für Hochglanzbearbeitung kann vorteilhafterweise als Werkzeugeinsatz ausgebildet sein, der in einem Gesamtwerkzeug, beispielsweise einem Fräswerkzeug oder einem Planmesserkopf, angeordnet wird. Dies erlaubt das Vorsehen mehrerer Werkzeugeinsätze in einem kompletten Werkzeug zu entsprechend rationaler und gleichmäßiger Bearbeitung des Werkstücks. Ein derartiges Fräswerkzeug ist beispielsweise aus der EP-0 126 432 bekannt.

Wenn vorteilhafterweise das Werkzeug als Werkzeugeinsatz in dem bzw. durch das Fräswerkzeug in drei Dimensionen einstellbar ist, so kann die Spantiefe dieser Fertigschneide definiert zu den Vorschneiden eingestellt werden. Somit können vorteilhafterweise größere Zustelltiefen ohne Vorbearbeitung zerspant werden, was wiederum eine erhebliche Bearbeitungsrationalisierung ermöglicht.

Weitere Einzelheiten, Merkmale und Vorteile der vorliegenden Erfindung ergeben sich aus der nachfolgenden Beschreibung unter Bezugnahme auf die Zeichnung.

Darin zeigt:
- Fig. 1: in explosionsartiger Darstellung eine erste Ausführungsform des erfindungsgemäßen Werkzeugs für Hochglanzbearbeitung;
- Fig. 2: eine alternative Ausführungsform des Führungsbereichs zwischen Einstellhalter und Schneidstoffelementträger;
- Fig. 3: eine Seitenansicht auf ein fertigmontiertes Werkzeug von links in bezug auf Fig. 1; und
- Fig. 4: eine Seitenansicht auf das fertigmontierte Werkzeug von Fig. 1 von rechts.

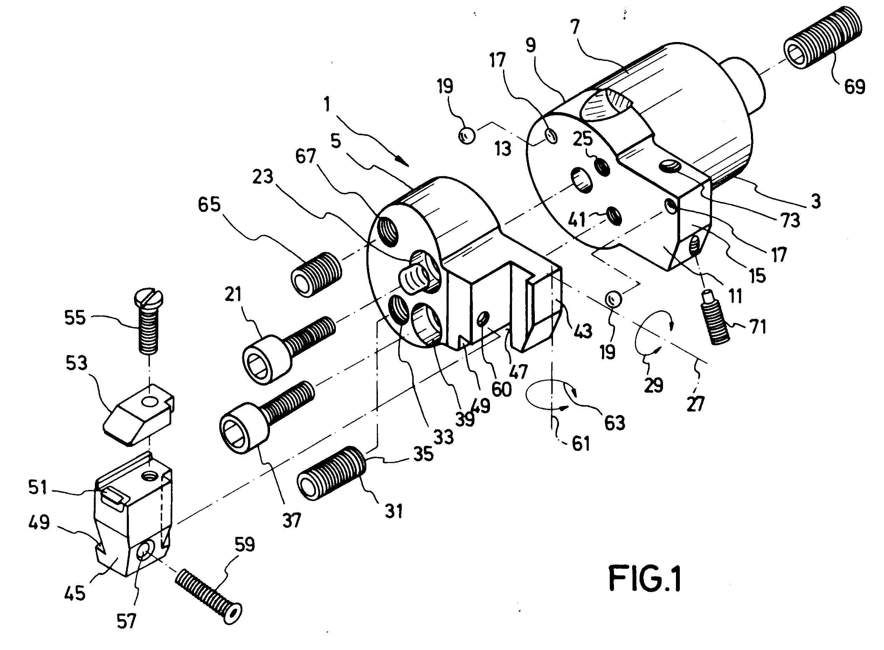

In Fig. 1 ist in explosionsartiger Darstellung eine erste Ausführungsform eines erfindungsgemäßen Werkzeuges 1 dargestellt. Das erfindungsgemäße Werkzeug 1 weist ein Aufnahmeteil 3 und einen Einstellhalter 5 auf.

Das Aufnahmeteil 3 weist einen zylindrischen Lagerbereich 7 zur Aufnahme in ein Grundwerkzeug (nicht dargestellt) auf, wie es beispielsweise aus der EP-0 126 432 bekannt ist. Weiterhin weist das Aufnahmeteil einen Aufnahmebereich 9 für den Einstellhalter 5 auf. Der Aufnahmebereich 9 weist eine zur Achse des im wesentlichen zylindrischen Aufnahmeteils 3 senkrecht verlaufende Auflagefläche 11 auf, die einer entsprechend verlaufenden Fläche 13 des Einstellhalters 5 gegenüberliegt.

Der Aufnahmebereich 9 weist weiterhin einen seitlichen Vorsprung 15 auf, über den sich die Auflagefläche 11 auch erstreckt.

Im in der Figur dargestellten oberen Bereich der Auflagefläche 11 sind zwei halbkugelförmige Vertiefungen 17 vorgesehen zur Aufnahme von Kugeln 19, die als Schwenkpunkte dienen. In der Fläche 13 des Einstellhalters 5 sind ebenfalls entsprechend halbkugelförmige Vertiefungen vorgesehen, die im montierten Zustand in Anlage an die Kugeln 19 kommen.

Zur Festlegung des Einstellhalters 5 am Aufnahmeteil 3 ist eine mit einem Kopf versehene Schraube 21 vorgesehen, die sich durch eine Bohrung 23 im Einstellhalter 5 erstreckt und im montierten Zustand in ein Gewinde 25 im Aufnahmeteil 3 eingeschraubt ist.

Aus der bisherigen Konfiguration des Werkzeugs 1 ergibt sich, daß durch Anlage des Einstellhalters 5 an das Aufnahmeteil 3 an den Kugeln 19 eine Schwenkachse 27 definiert wird, um die der Einstellhalter 5 bezüglich des Aufnahmeteils 3 schwenkbar ist. Dies wird durch Doppelpfeil 29 verdeutlicht.

Gemäß der Ausführungsform ist das Gewinde 25 im Aufnahmeteil 3 leicht oberhalb der gedachten Schwenkachse 27 angeordnet.

Zum Ermöglichen einer Verschwenkung des Einstellhalters 5 gegenüber dem Aufnahmeteil 3 wird auf einfache Weise eine Stellschraube 31 vorgesehen, die sich durch ein Gewinde 33 im Einstellhalter 5 erstreckt. Das Gewinde 33 ist im unteren Bereich des Einstellhalters 5 angeordnet. Die Stellschraube 31 weist an ihrem der Auflagefläche 11 des Aufnahmeteils 3 zugewandten Ende eine Anlagefläche 35 zur Anlage an die Auflagefläche 11 auf.

Zum Fixieren der Schwenklage ist weiterhin eine Fixierschraube 37 vorgesehen, die sich durch eine Bohrung 39 im Einstellhalter 5 hindurch in ein Gewinde 41 im Aufnahmeteil 3 erstreckt. Die Fixierschraube 37 weist wiederum einen Kopf auf, der zur Anlage in der Bohrung 39 an einen entsprechenden Absatz geeignet ist, so daß hierdurch eine Kraftübertragung entsteht, wie dies bereits bei der Schraube 21 und Bohrung 23 vorgesehen ist.

Der Einstellhalter weist einen Aufnahmebereich 43 für die Aufnahme eines Schneidstoffelementträgers auf. Der Schneidstoffelementträger 45 wird in eine rechteckförmige Ausnehmung 47 eingesetzt, wobei zur Führung des Schneidstoffelementträgers 45 in dem Aufnahmebereich 43 eine Führung 49 vorgesehen ist, die aus jeweils komplimentären nicht im rechten Winkel verlaufenden Flächen gebildet ist.

Der Schneidstoffelementträger 45 weist an seiner Oberseite ein Schneidstoffelement 51 auf, das mit einer Spannpratze 53 im Schneidstoffelementträger 45 festgelegt werden kann. Vorzugsweise ist das Schneidstoffelement 51 aus Diamant gebildet. Die Spannpratze 53 wird mittels einer Schraube 55 festgezogen.

Zur Lagesicherung des Schneidstoffelementträgers 45 am Einstellhalter 5 ist wiederum auf einfache Weise eine Fixierungseinrichtung in Form einer durch eine Bohrung 57 sich erstreckende Fixierschraube 59 erzielt, die in einem Gewinde 60 im Einstellhalter 5 festlegbar ist.

Bei Schneidwerkzeugen, wie Diamanten, ist es üblicherweise notwendig, die Bombierungslage einzustellen. Das Einstellen der Bombierungslage erfolgt durch ein Verschwenken des Schneidstoffelements 51 um eine Achse 61, welche senkrecht zur Achse des zylindrischen Aufnahmeteils 3 und auch senkrecht zur Schwenkachse 27 verläuft. Dabei erfolgt das Schwenken gemäß Doppelpfeil 63.

Um ein Verschwenken des Einstellhalters 5 gemäß Doppelpfeil 63 zu bewerkstelligen, wird eine Verstelleinrichtung in Form einer Einstell- oder Stellschraube 65 vorgesehen, die sich in ein Gewinde 67 im Einstellhalter 5 erstreckt. Das Gewinde 67 befindet sich im Einstellhalter 5 an der Stelle, daß es auf die Kugel im Aufnahmebereich 9 bzw. der Auflagefläche 11 des Aufnahmeteils 3 trifft.

Wie oben ausgeführt, sind in der Fläche 13 des Einstellhalters 5 zur Aufnahme der Kugeln 19, die beispielsweise an das Aufnahmeteil 3 festgelötet sein können, entsprechende halbkugelförmige Vertiefungen vorgesehen. Demzufolge weist die Stellschraube 65 an ihrem dem Aufnahmeteil 3 zugewandten Ende diese halbkugelförmige Vertiefung auf.

Das erfindungsgemäße Werkzeug 1 ist in der dargestellten Form als Werkzeugeinsatz ausgebildet, der beispielsweise in ein Fräswerkzeug gemäß EP-0 126 432 einsetzbar ist. Hierzu ist eine Stiftschraube 69 vorgesehen, die dazu dient, die Axialeinstellung des Aufnahmeteils zu regeln und damit die Spantiefe einzustellen.

Weiterhin ist zum Festlegen des Aufnahmeteils in dem nicht dargestellten Fräswerkzeug eine Stiftschraube 71 vorgesehen, welche drehbeweglich in einem Gewinde 73 in dem seitlichen Vorsprung 15 des Aufnahmebereichs 2 des Aufnahmeteils 3 angeordnet ist und zur Klemmung des Aufnahmeteils 3 in dem Grundwerkzeug dient.

Die Einstellung des Spanwinkels bzw. des Freiwinkels des Schneidstoffelements 51 erfolgt durch Schwenkung des Einstellhalters 5 um die Achse 27. Der Einstellhalter 5 ist auf dem Aufnahmeteil 3 mittels der Schraube 21 befestigt. Die Schwenkung zur Einstellung des Span- bzw. Freiwinkels wird durch Verdrehen der Stellschraube 31 erreicht. Danach wird die Fixierschraube 37 angezogen zur Fixierung des Einstellhalters 5 gegenüber dem Aufnahmeteil 3.

Eine weitere Schwenkung zur Einstellung der Bombierungslage erfolgt mittels der Stellschraube 65, so daß der Einstellhalter 5 zusätzlich um die Achse 61 bezüglich des Aufnahmeteils 3 schwenkt.

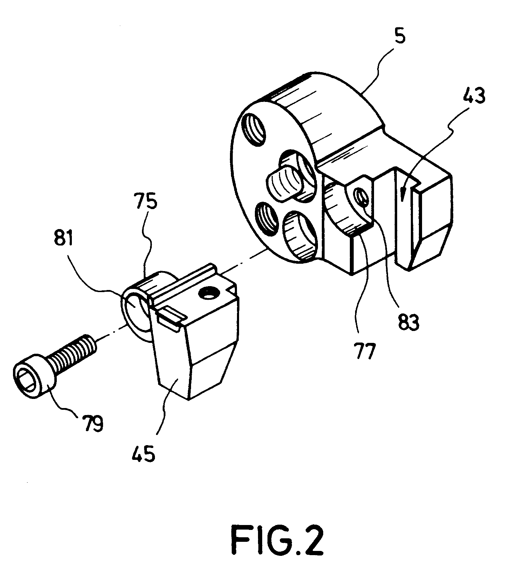

In Fig. 2 sind Einstellhalter 5 und Schneidstoffelementträger 45 mit einem alternativen Führungsbereich dargestellt. Anstelle der Führung 49 von Fig. 1 weist der Schneidstoffelementträger 45 einen bogenförmigen Vorsprung 75 auf, der in einer entsprechenden bogenförmigen Ausnehmung 77 im Einstellhalter 5 zur Anlage gebracht wird, so daß der Schneidstoffelementträger 45 eine definierte Lage im Einstellhalter 5 im Aufnahmebereich 43 einnimmt.

Zur Fixierung des Schneidstoffelementträgers 45 ist eine Kopfschraube 79 vorgesehen, die sich durch eine mit einem Absatz versehene Bohrung 81 im bogenförmigen Vorsprung 75 hindurch erstreckt und in einem Gewinde 83 im Einstellhalter 5 festlegbar ist.

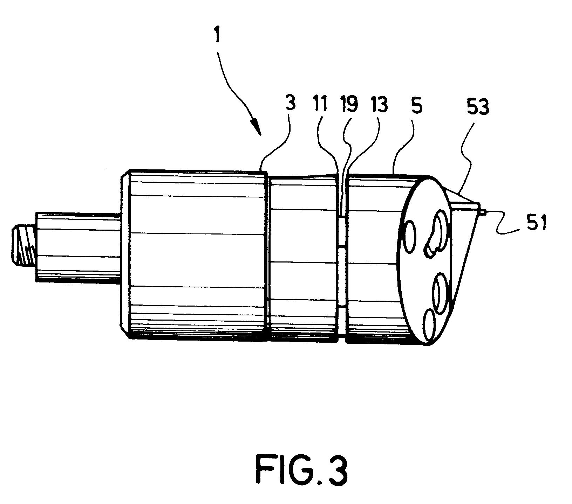

Fig. 3 zeigt das erfindungsgemäße Werkzeug von Fig. 1 in zusammengebautem Zustand in einer Ansicht seitlich links von Fig. 1. Im gezeichneten Fall verlaufen die Flächen 11 und 13 im wesentlichen parallel zueinander, so daß hier keine Verschwenkung des Einstellhalters 5 gegenüber dem Aufnahmeteil 3 erfolgt ist.

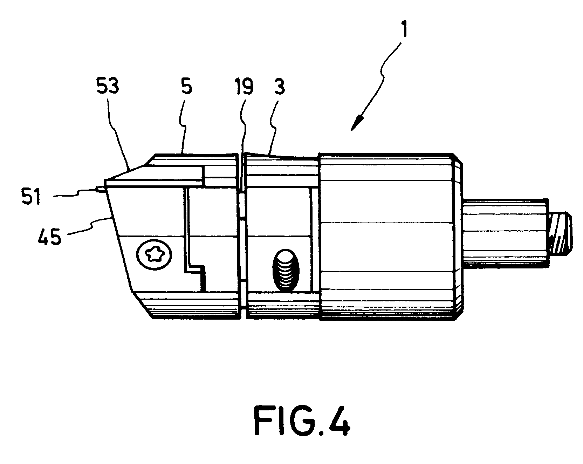

Fig. 4 zeigt schließlich das Werkzeug 1 von der rechten Seite von Fig. 1 in der ebenfalls zu Fig. 3 analogen Stellung.

Die in den Fig. 3 und 4 angegebenen Bezugszeichen entsprechen den Bezugszeichen von Fig. 1.

Somit wird insgesamt ein Werkzeug geschaffen, mit dessen Hilfe eine Hochglanzbearbeitung von NE-Metallen und Kunststoffen ermöglicht wird, wobei neben der Einstellung des Span- bzw. Freiwinkels auch die Möglichkeit der Einstellung der Bombierungslage geschaffen wird.

## Patentansprüche

1. Spanabhebendes Werkzeug für Hochglanzbearbeitung, mit einem ein Schneidstoffelement lagernden Einstellhalter (5) und einem, den Einstellhalter lagernden Aufnahmeteil (3), wobei der Einstellhalter (5) um eine Achse (27) kontinuierlich schwenkbar am Aufnahmeteil (3) gehalten ist, die im wesentlichen in der den Spanwinkel enthaltenden Spanflächenebene verläuft, wobei der Einstellhalter (5) um eine weitere Achse (61) kontinuierlich einstellbar verschwenkbar ist, die sowohl senkrecht zur Schwenkachse (27) als auch senkrecht zur Achse des zylindrischen Aufnahmeteils (3) verläuft, wobei der Einstellhalter (5) mittels einer Befestigungsschraube (21) an dem Aufnahmeteil (3) gelagert und um zwei Schwenkelemente (19) schwenkbar angeordnet ist, wobei die Schwenkachse (27) durch die Schwenkelemente (19) verläuft.

2. Werkzeug nach Anspruch 1, **dadurch gekennzeichnet,** daß die Schwenkelemente Kugeln (19) sind.

3. Werkzeug nach einem der Ansprüche 1 bis 2, **dadurch gekennzeichnet,** daß die Schwenkbewegung mittels einer Stellschraube (31) erfolgt, die sich durch ein Gewinde (33) im Einstellhalter (5) erstreckt und gegen eine Anlagenfläche (11) am Aufnahmeteil (3) anliegt.

4. Werkzeug nach Anspruch 3, **dadurch gekennzeichnet,** daß die Schwenkstellung durch eine fixierschraube (37) fixiert wird, die sich in einer Bohrung (39) durch den Einstellhalter (5) und in ein Gewinde (41) im Aufnahmeteil (3) erstreckt.

5. Werkzeug nach einem der Ansprüche 1 bis 4, **dadurch gekennzeichnet,** daß die Schwenkachse (27) im wesentlichen auf der Höhe des Schneidstoffelements (51) verläuft.

6. Werkzeug nach einem der Ansprüche 3 bis 5, **dadurch gekennzeichnet,** daß die Auflagenfläche (11) im wesentlichen parallel zur Schwenkachse (27) und im wesentlichen senkrecht zur Spanwinkelebene verläuft.

7. Werkzeug nach einem der Ansprüche 4 bis 6, **dadurch gekennzeichnet,** daß die Stellschraube (31) und/oder die Fixierschraube (37) von der Schwenkachse (27) beabstandet angeordnet sind.

8. Werkzeug nach einem der Ansprüche 1 bis 7, **dadurch gekennzeichnet,** daß weiterhin eine Einrichtung zur Einstellung der Bombierungslage des Schneidstoffelements (51) vorgesehen ist.

9. Werkzeug nach Anspruch 8, **dadurch gekennzeichnet,** daß das Einstellen mittels einer Einstellschraube (65) erfolgt, die auf ein Schwenkelement (19) trifft und sich in einem Gewinde (67) durch den Einstellhalter (5) erstreckt.

10. Werkzeug nach Anspruch 9, **dadurch gekennzeichnet,** daß die Einstell- bzw. Stellschraube (65) an ihrem dem Aufnahmeteil (1) zugewandten Ende eine halbkugelförmige Vertiefung aufweist zum Eingriff mit einer der Kugeln (19).

11. Werkzeug nach einem der Ansprüche 1 bis 10, **dadurch gekennzeichnet,** daß das Schneidstoffelement (51), vorzugsweise aus einem monokristallinem Schneidstoff, wie besipielsweise einem Naturdiamanten, gebildet ist.

12. Werkzeug nach einem der Ansprüche 1 bis 11, **dadurch gekennzeichnet,** daß das Schneidstoffelement (51) in einem Schneidstoffelementträger (45) aufgenommen ist, der seinerseits im Einstellhalter (5) gelagert ist.

13. Werkzeug nach Anspruch 12, **dadurch gekennzeichnet,** daß das Schneidstoffelement (51) mittels einer Spannpratze (53) im Schneidstoffelementträger (45) festgelegt ist.

14. Werkzeug nach Anspruch 12 oder 13, **dadurch gekennzeichnet,** daß der Schneidstoffelementträger (45) mittels einer Schrägführung (49) im Einstellhalter (5) geführt ist.

15. Werkzeug nach Anspruch 12 oder 13, **dadurch gekennzeichnet,** daß der Schneidstoffelementträger (45) mittels eines bogenförmigen Vorsprungs (75) im Einstellhalter (5) geführt ist, der eine entsprechende bogenförmige Ausnehmung (77) aufweist.

16. Werkzeug nach einem der Ansprüche 12 bis 15, **dadurch gekennzeichnet,** daß der Schneidstoffelementträger (45) mittels wenigstens einer Schraube (59; 79) im Einstellhalter (5) festgelegt ist.

17. Werkzeug nach einem der Ansprüche 1 bis 16, **dadurch gekennzeichnet,** daß es als Werkzeugeinsatz ausgebildet ist, der in einem Fräswerkzeug angeordnet ist.

18. Werkzeug nach Anspruch 17, **dadurch gekennzeichnet,** daß es in dem bzw. durch das Fräswerkzeug in drei Dimensionen einstellbar ist.

## Claims

1. Metal-cutting tool for high-polish machining, with an adjusting holder (5) supporting an element of cutting material, and a receiving portion (3) supporting the adjusting holder, wherein the adjusting holder (5) is held on the receiving portion (3) so as to be continuously pivotable about an axis (27) which extends essentially in the face plane containing the effective cutting angle, wherein the adjusting holder (5) is continuously adjustably pivotable about a further axis (61) which extends both perpendicularly to the pivot axis (27) and perpendicularly to the axis of the cylindrical receiving portion (3), wherein the adjusting holder (5) is mounted on the receiving portion (3) by means of a fixing screw (21) and arranged so as to be pivotable about two pivot elements (19), wherein the pivot axis (27) extends through the pivot elements (19).

2. Tool according to claim 1, characterised in that the pivot elements are balls (19).

3. Tool according to claim 1 to 2, characterised in that the pivot movement takes place by means of a set screw (31) which extends through a thread (33) in the adjusting holder (5) and abuts against a bearing surface (11) on the receiving portion (3).

4. Tool according to claim 3, characterised in that the pivot position is fixed by a fixing screw (37) which extends in a bore (39) through the adjusting holder (5) and into a thread (41) in the receiving portion (3).

5. Tool according to any of claims 1 to 4, characterised in that the pivot axis (27) extends essentially at the level of the element (51) of cutting material.

6. Tool according to any of claims 3 to 5, characterised in that the bearing surface (11) extends essentially parallel to the pivot axis (27) and essentially perpendicularly to the plane of the effective cutting angle.

7. Tool according to any of claims 4 to 6, characterised in that the set screw (31) and/or the fixing screw (37) are arranged at a distance from the pivot axis (27).

8. Tool according to any of claims 1 to 7, characterised in that furthermore a device for adjusting the camber position of the element (51) of cutting material is provided.

9. Tool according to claim 8, characterised in that adjustment takes place by means of an adjusting screw (65) which impinges on a pivot element (19) and extends in a thread (67) through the adjusting holder (5).

10. Tool according to claim 9, characterised in that the adjusting or set screw (65) at its end facing towards the receiving portion (1) comprises a hemispherical recess for engagement with one of the balls (19).

11. Tool according to any of claims 1 to 10, characterised in that the element (51) of cutting material is formed preferably from a monocrystalline cutting material, such as for example a natural diamond.

12. Tool according to any of claims 1 to 11, characterised in that the element (51) of cutting material is received in a carrier (45) for the element, which is in turn mounted in the adjusting holder (5).

13. Tool according to claim 12, characterised in that the element (51) of cutting material is fixed in the carrier (45) by means of a clamping lug (53).

14. Tool according to claim 12 or 13, characterised in that the carrier (45) for the element of cutting material is guided in the adjusting holder (5) by means of an oblique guide (49).

15. Tool according to claim 12 or 13, characterised in that the carrier (45) for the element of cutting material is guided in the adjusting holder (5) by means of an arcuate projection (75) which comprises a corresponding arcuate recess (77).

16. Tool according to any of claims 12 to 15 characterised in that the carrier (45) for the element of cutting material is fixed in the adjusting holder (5) by means of at least one screw (59; 79).

17. Tool according to any of claims 1 to 16, characterised in that it is constructed as a tool insert which is arranged in a milling cutter.

18. Tool according to claim 17, characterised in that it is adjustable in three dimensions in or by the milling cutter.

## Revendications

1. Outil d'usinage pour le traitement de polissage spéculaire, comprenant un support réglable (5) recevant un élément de coupe, et une pièce de réception (3) recevant le support réglable, le support réglable (5) étant maintenu sur la pièce de réception (3) de manière continûment pivotante autour d'un axe (27) qui est situé pour l'essentiel dans le plan d'usinage contenant l'angle d'usinage, le support réglable (5) étant continûment pivotant de façon réglable autour d'un autre axe (61), qui est à la fois perpendiculaire à l'axe de pivotement (27) et perpendiculaire à l'axe de la pièce de réception cylindrique (3), le support réglable (5) étant monté sur la pièce de réception (3) au moyen d'une vis de fixation (21) et étant placé de manière pivotante autour de deux éléments de pivotement (19), l'axe de pivotement (27) traversant les éléments de pivotement (19).

2. Outil selon la revendication 1, caractérisé en ce que les éléments de pivotement sont des sphères (19).

3. Outil selon la revendication 1 à 2, caractérisé en ce que le mouvement de pivotement se fait au moyen d'une vis de réglage (31) qui s'étend à travers un filetage (33) dans le support réglable (5) et s'appuie contre une surface d'appui (11) sur la pièce de réception (3).

4. Outil selon la revendication 3, caractérisé en ce que la position de pivotement est fixée par une vis de fixation (37) qui s'étend dans un perçage (39) à travers le support réglable (5) et dans un filetage (41) dans la pièce de réception (3).

5. Outil selon l'une des revendications 1 à 4, caractérisé en ce que l'axe de pivotement (27) passe pour l'essentiel à hauteur de l'élément de coupe (51).

6. Outil selon l'une des revendications 3 à 5, caractérisé en ce que la surface d'appui (11) s'étend pour l'essentiel parallèlement à l'axe de pivotement (27) et pour l'essentiel perpendiculairement au plan de l'angle de coupe.

7. Outil selon l'une des revendications 4 à 6, caractérisé en ce que la vis de réglage (31) et/ou la vis de fixation (37) est placée à distance de l'axe de pivotement (27).

8. Outil selon l'une des revendications 1 à 7, caractérisé en ce que, de plus, un dispositif de réglage de la position de bombage de l'élément de coupe (51) est prévu.

9. Outil selon la revendication 8, caractérisé en ce que le réglage se fait au moyen d'une vis de réglage (65) qui rencontre un élément de pivotement (19) et s'étend dans un filetage (67) à travers le support réglable (5).

10. Outil selon la revendication 9, caractérisé en ce que la vis de réglage (65) présente, sur son extrémité tournée vers la pièce de réception (1), un renfoncement hémisphérique destiné à se mettre en prise avec l'une des sphères (19).

11. Outil selon l'une des revendications 1 à 10, caractérisé en ce que l'élément de coupe (51) est formé de préférence dans une matière de coupe monocristalline, comme, par exemple, un diamant naturel.

12. Outil selon l'une des revendications 1 à 11, caractérisé en ce que l'élément de coupe (51) est logé dans un support d'élément de coupe (45) qui est monté de son côté dans le support réglable (5).

13. Outil selon la revendication 12, caractérisé en ce que l'élément de coupe (51) est immobilisé au moyen d'une griffe de serrage (53) dans le support d'élément de coupe (45).

14. Outil selon la revendication 12 ou 13, caractérisé en ce que le support d'élément de coupe (45) est guidé dans le support réglable (5) au moyen d'un guidage oblique (49).

15. Outil selon la revendication 12 ou 13, caractérisé en ce que le support d'élément de coupe (45) est guidé dans le support réglable (5) au moyen d'une saillie arquée (75), qui présente un évidement arqué correspondant (77).

16. Outil selon l'une des revendications 12 à 15, caractérisé en ce que le support d'élément de coupe (45) est immobilisé dans le support réglable (5) au moyen d'au moins une vis (59; 79).

17. Outil selon l'une des revendications 1 à 16, caractérisé en ce qu'il est conformé en insert d'outil qui est placé dans un outil de fraisage.

18. Outil selon la revendication 17, caractérisé en ce qu'il est réglable dans les trois dimensions par, respectivement dans, l'outil de fraisage.
